# EUROPÄISCHE PATENTSCHRIFT

(11) **EP 3 607 219 B1**
(45) Veröffentlichungstag und Bekanntmachung des Hinweises auf die Patenterteilung: **30.09.2020**
(21) Anmeldenummer: 18716955.2
(22) Anmeldetag: 29.03.2018
(51) Int. Cl.: F16C 33/74, F16C 33/76, F16C 33/80, F16J 15/447, F16C 19/10

(54) **LAGER FÜR EIN STÜTZLAGER**
BEARING FOR A SUPPORT BEARING
PALIER POUR UN PALIER DE SUPPORT

(30) Priorität: 03.04.2017 DE 102017107135
(43) Veröffentlichungstag der Anmeldung: 12.02.2020
(73) Patentinhaber: Vibracoustic AG, 64293 Darmstadt (DE)
(72) Erfinder: WERNER, Philipp, 21339 Lüneburg (DE); KARDOES, Hilrich, 21423 Winsen (DE)
(74) Vertreter: Patentanwälte Olbricht Buchhold Keulertz
(86) Internationale Anmeldenummer: PCT/EP2018/058173
(87) Internationale Veröffentlichungsnummer: WO 2018/185006

(56) Entgegenhaltungen:
- EP-A1- 3 085 980
- FR-A1- 2 965 028
- US-A- 3 940 153
- US-B1- 8 348 291

## Beschreibung

Die vorliegende Erfindung betrifft ein Lager für ein Stützlager, aufweisend ein erstes Gehäuseteil und ein zweites Gehäuseteil, zwischen denen ein Gehäusespalt ausgebildet ist, wobei in dem Gehäusespalt eine Lagereinrichtung angeordnet ist, wobei ein Dichtungssystem vorgesehen ist, das den Gehäusespalt abdichtet.

Ein Lager der eingangs genannten Art kommt in einem Stützlager von gelenkten Achsen zum Einsatz, um eine Rotation zwischen einer Fahrzeugkarosserie und einer Feder, die Teil eines Federbeins, insbesondere eines McPherson-Federbeins, sein kann, zu ermöglichen.

Das Lager ist dazu in einem Stützlager aufgenommen, das auch als "top mount" bezeichnet werden kann. Über das Stützlager werden die in die Feder beziehungsweise in einen Dämpfer eingeleiteten Kräfte in die Fahrzeugstruktur übertragen.

Ein Lager der eingangs genannten Art kann auch in Luftfedern von Kraftfahrzeugen eingesetzt werden, um den Luftfederbalg vor Beschädigungen durch Torsion zu schützen, da aufgrund der Achskinematik selbst bei ungelenkten Achsen torsionale Bewegungen auftreten können.

Für eine einwandfreie Funktion des Lagers ist es erforderlich, die Lagereinrichtung vor Verschmutzung zu schützen. Hierzu ist es bekannt, die Lagereinrichtung mittels eines Dichtungssystems abzudichten.

Aus US 2015/0367698 A1 geht ein Federbeinlager mit zwei Gehäuseteilen und einem zwischen den beiden Gehäuseteilen angeordneten Gleitlager hervor, wobei das Gleitlager durch eine aus beiden Gehäuseteilen gebildete Labyrinthdichtung abgedichtet ist.

Aus US 9,261,134 B2 und WO 2015/199022 A1 gehen Federbeinlager mit zwei Gehäuseteilen hervor, zwischen denen ein Gleitlager angeordnet ist, das mittels zweier Dichtlippen vor Medieneinflüssen abgedichtet ist.

Ferner geht aus US 8 348 291 B1 ein Federbeinstützlager für ein Federbein hervor, das ein oberes Teil, welches relativ zur Fahrzeugkarosserie drehfest ist, und ein unteres Teil aufweist, das sich mit dem Achsschenkel dreht, wobei zwischen den beiden Teilen eine Labyrinthdichtung angeordnet ist. Zwischen einem Flansch des unteren Teils und einem Flansch einer Feder ist eine verschwenkbare Dichtung aus Elastomer eingeklemmt.

Darüber hinaus geht aus FR 2 965 028 A1 ein Federbeinstützlager hervor, das ein Gehäuseunterteil, ein Gehäuseoberteil und ein dazwischen angeordnetes Wälzlager aufweist. An das Gehäuseunterteil ist ein Dichtelement aus Elastomer angeformt, das endseitig mit zwei Dichtlippen versehen ist. Eine der Dichtlippen liegt dichtend an dem Gehäuseoberteil an und die andere Dichtlippe ist von dem Gehäuseoberteil beabstandet.

Der vorliegenden Erfindung liegt die Aufgabe zugrunde, ein Lager für ein Stützlager zu schaffen, das eine verbesserte Dichtung aufweist und kostengünstig herstellbar ist.

Zur Lösung der Aufgabe wird ein Lager mit den Merkmalen des Anspruchs 1 vorgeschlagen.

Vorteilhafte Ausgestaltungen des Lagers sind in den abhängigen Ansprüchen offenbart.

Das erfindungsgemäße Lager für ein Stützlager, weist ein erstes Gehäuseteil und ein zweites Gehäuseteil auf, zwischen denen ein Gehäusespalt ausgebildet ist, wobei in dem Gehäusespalt eine Lagereinrichtung angeordnet ist, wobei ein Dichtungssystem vorgesehen ist, das den Gehäusespalt abdichtet, wobei das Dichtungssystem wenigstens eine erste Dichtlippe aufweist, die verschwenkbar ausgebildet ist, wobei die erste Dichtlippe im nicht-dichtenden Zustand von dem ersten Gehäuseteil und/oder dem zweiten Gehäuseteil beabstandet ist und zum Abdichten des Gehäusespaltes verschwenkt und an dem ersten Gehäuseteil und/oder dem zweiten Gehäuseteil anliegt, wobei das Dichtungssystem einen Auflageabschnitt zur Auflage eines Federelementes aufweist, der stoffeinheitlich in das Dichtungssystem integriert ist, wobei das Dichtungssystem formschlüssig und/oder stoffschlüssig mit dem ersten Gehäuseteil und/oder dem zweiten Gehäuseteil verbunden ist, und wobei das Dichtungssystem und das erste Gehäuseteil und/oder das zweite Gehäuseteil im 2-Komponenten-Spritzgußverfahren hergestellt sind.

Das Lager wird vorzugsweise in einem Stützlager für ein Kraftfahrzeug eingesetzt. Unter einem Kraftfahrzeug wird vorliegend sowohl ein Personenkraftfahrzeug als auch ein Nutzfahrzeug verstanden. Das Lager kann in einem Stützlager für ein Federbein eingesetzt werden, um eine Rotation zwischen einer Fahrzeugkarosserie und einer Feder, die Bestandteil des Federbeins ist, zu ermöglichen. Ferner kann das Lager auch bei einer Luftfeder eingesetzt werden, um die auftretenden Torsionsbewegungen auszugleichen, die durch Vorspuränderungen an gelenkten und nicht gelenkten Achsen zum Beispiel während des Einfederns entstehen.

Sobald ein äußerer Medienstrahl, wie beispielsweise ein Wasserpartikelgemisch, auf die erste Dichtlippe auftrifft, verschwenkt die erste Dichtlippe und liegt an dem ersten Gehäuseteil und/oder dem zweiten Gehäuseteil an und verschließt beziehungsweise dichtet den Gehäusespalt ab. Somit ist die Lagereinrichtung effektiv vor äußeren Medieneinflüssen und somit vor einer Verschmutzung geschützt. Da die erste Dichtlippe im nicht-dichtenden Zustand von dem ersten Gehäuseteil und/oder dem zweiten Gehäuseteil beabstandet ist, wird im Betriebszustand ein berührungsloses Dichtungssystem geschaffen, so dass für eine rotatorische Relativbewegung der beiden Gehäuseteile nur geringe Losbrechmomente und damit einhergehend geringe Drehmomente erforderlich sind. Darüber hinaus weist das Dichtungssystem im Betriebszustand eine gute Dichtungswirkung auf. Wenn kein Medienstrahl mehr auf die erste Dichtlippe auftrifft, verschwenkt die erste Dichtlippe wieder in ihren von dem ersten Gehäuseteil und/oder zweiten Gehäuseteil beabstandeten Zustand zurück, so dass in den Gehäusespalt eingetretenes Medium wieder aus dem Gehäusespalt abfließen kann. Da das Dichtungssystem zwischen den beiden Gehäuseteilen angeordnet ist, kann die Lagereinrichtung äußerst wirksam und gleichzeitig kostengünstig vor Medien- und Umwelteinflüssen geschützt werden.

In einer vorteilhaften Ausgestaltung ist zwischen der wenigstens ersten Dichtlippe und dem ersten Gehäuseteil und/oder dem zweiten Gehäuseteil ein näherungsweise horizontal verlaufender erster Spalt ausgebildet. Vorteilhaft weist der erste Spalt eine Länge von mindestens 5 mm auf. Die Länge des näherungsweise horizontal verlaufenden ersten Spaltes entspricht der Entfernung von einem freien Ende der ersten Dichtlippe bis zu dem Beginn des Gehäusespaltes oder einer ersten Kammer. Dadurch wird für die Anlage der ersten Dichtlippe eine ausreichend flächige Abstützung geschaffen. Darüber hinaus muss ein eindringendes Medium, wie beispielsweise ein Fluid, zunächst eine gewisse Wegstrecke zurücklegen, bis es in den Gehäusespalt oder eine erste Kammer eindringt. Somit wird eine verbesserte Abdichtung geschaffen. Unter näherungsweise horizontal verlaufend wird vorliegend verstanden, dass der erste Spalt waagerecht verläuft, oder dass der erste Spalt in einem Winkel von gleich oder weniger als 5° zu einer Mittelachse des Lagers verläuft.

In einer vorteilhaften Ausgestaltung ragt die erste Dichtlippe im nicht-dichtenden Zustand näherungsweise horizontal von dem ersten Gehäuseteil und/oder dem zweiten Gehäuseteil ab. Da die Dichtlippe im nicht-dichtenden Zustand von dem ersten Gehäuseteil und/oder dem zweiten Gehäuseteil abragt, wird ein berührungsloses Dichtungssystem geschaffen. Dadurch ist im unbelasteten, nicht-dichtenden Zustand für eine rotatorische Relativbewegung der beiden Gehäuseteile ein geringes Losbrechmoment erforderlich. Darüber hinaus kann die erste Dichtlippe durch ihre horizontale Anordnung beim Auftreffen eines Mediums verschwenken und damit den Gehäusespalt zum Abdichten verschließen. Im dichtenden Zustand arbeitet das Dichtungssystem ähnlich einem berührenden Dichtungssystem, bei dem die Dichtlippe an dem ersten Gehäuseteil und/oder dem zweiten Gehäuseteil anliegt. Unter näherungsweise horizontal abragend wird vorliegend verstanden, dass die erste Dichtlippe waagerecht von dem ersten Gehäuseteil und/oder zweiten Gehäuseteil abragt, oder dass die erste Dichtlippe einen Winkel von gleich oder weniger als 5° zu dem ersten Gehäuseteil und/oder dem zweiten Gehäuseteil einschließt.

In einer vorteilhaften Ausgestaltung weist die erste Dichtlippe auf einer dem ersten Gehäuseteil und/oder dem zweiten Gehäuseteil abgewandten Seite eine konturierte Fläche auf. Dadurch kann die zum Verschwenken und Schließen des Gehäusespaltes erforderliche Kraft gezielt eingestellt werden. Die erste Dichtlippe kann auf einer dem ersten Gehäuseteil und/oder dem zweiten Gehäuseteil abgewandten Seite in Richtung ihres freien Endes spitz zulaufend ausgebildet.

In einer vorteilhaften Ausgestaltung schließt sich an die erste Dichtlippe eine erste Kammer an. Die sich an die erste Dichtlippe anschließende erste Kammer sorgt für eine Querschnittsaufweitung, so dass der Druck bei einem Eintritt eines Mediums in den Gehäusespalt effektiv abgebaut werden kann. Vorteilhaft ist die Kammer derart ausgebildet, dass eine Rezirkulation in ihrem Inneren auftritt und so weiter Druck bei einem eintretenden Medium abgebaut werden kann. Die erste Kammer ist bevorzugt innerhalb des Gehäusespaltes angeordnet. Weiterhin vorteilhaft begrenzt die erste Dichtlippe die erste Kammer nach außen. Vorteilhaft ist die erste Kammer in das Dichtungssystem eingebracht. Weiterhin vorteilhaft kann die erste Kammer zwischen dem Dichtungssystem und dem ersten Gehäuseteil und/oder dem zweiten Gehäuseteil gebildet sein.

In einer vorteilhaften Ausgestaltung weist das Dichtungssystem eine zweite Dichtlippe auf. Die zweite Dichtlippe bewirkt eine zusätzliche Abdichtung des Gehäusespaltes, wenn gegebenenfalls Medium in den Gehäusespalt eintritt, beispielsweise wenn die erste Dichtlippe beschädigt ist. Vorteilhaft ist die zweite Dichtlippe verschwenkbar ausgebildet, wobei die zweite Dichtlippe im nicht-dichtenden Zustand von dem ersten Gehäuseteil und/oder dem zweiten Gehäuseteil beabstandet ist und zum Abdichten des Gehäusespaltes verschwenkt und an dem ersten Gehäuseteil und/oder dem zweiten Gehäuseteil anliegt. Somit ist die zweite Dichtlippe als eine berührungslose Dichtung ausgebildet.

In einer vorteilhaften Ausgestaltung sind die beiden Dichtlippen in Reihe angeordnet. Dadurch wird eine effektive Abdichtung des Gehäusespaltes geschaffen. Die zweite Dichtlippe wird erst dann aktiv, wenn Medium in den Gehäusespalt eintritt, beispielsweise wenn die erste Dichtlippe beschädigt ist.

In einer vorteilhaften Ausgestaltung ist die zweite Dichtlippe innerhalb des Gehäusespaltes angeordnet, wobei zwischen der zweiten Dichtlippe und dem ersten Gehäuseteil und/oder dem zweiten Gehäuseteil ein zweiter Spalt ausgebildet ist. Dadurch ist die zweite Dichtlippe erst dann wirksam, wenn Medium in den Gehäusespalt eintritt, beispielsweise wenn die erste Dichtlippe beschädigt ist. Vorteilhaft ist der Verlauf des zweiten Spaltes zwischen zweiter Dichtlippe und dem Gehäuseteil aufsteigend nach oben gerichtet, so dass in diesen Gehäusespalt eintretendes Medium gegen die Schwerkraft aufsteigen muss und auch wieder nach unten abfließen kann.

In einer vorteilhaften Ausgestaltung begrenzt die zweite Dichtlippe die erste Kammer. Wenn der Druck bei einem Medieneintritt in dem Gehäusespalt beziehungsweise in der ersten Kammer ansteigt, legt sich die zweite Dichtlippe an das erste Gehäuseteil und/oder das zweite Gehäuseteil an, in dem die zweite Dichtlippe verschwenkt und den Gehäusespalt beziehungsweise den zweiten Spalt verschließt und abdichtet. Vorteilhaft liegt die zweite Dichtlippe an einer konischen Anlagefläche des ersten Gehäuseteiles und/oder des zweiten Gehäuseteils an.

In einer vorteilhaften Ausgestaltung ist die zweite Dichtlippe gewölbt. Insbesondere ist die zweite Dichtlippe in Richtung der ersten Dichtlippe gewölbt. Die Wölbung der zweiten Dichtlippe führt zu einer Rezirkulation eines eintretenden Mediums. Dies führt zu einem weiteren Druckabbau, so dass ein weiteres Eintreten des Mediums in den Gehäusespalt verhindert wird. Zudem bewirkt die in Richtung der ersten Dichtlippe gerichtete Wölbung, dass Medium, welches über die zweite Dichtlippe in den zweiten Spalt oder den Gehäusespalt eingetreten ist, aufgrund der Schwerkraft wieder aus dem zweiten Spalt oder dem Gehäusespalt abfließen kann.

In einer vorteilhaften Ausgestaltung schließt sich an die zweite Dichtlippe eine zweite Kammer an. Die zweite Kammer bewirkt einen weiteren Druckabbau aufgrund seiner Querschnittsaufweitung, wenn Medium über die zweite Dichtlippe weiter in den Gehäusespalt eintritt. Vorteilhaft ist die zweite Kammer in das Dichtungssystem eingebracht. Weiterhin vorteilhaft kann die zweite Kammer zwischen dem Dichtungssystem und dem ersten Gehäuseteil und/oder dem zweiten Gehäuseteil gebildet sein. Bevorzugt ist die Kammer auf einer der zweiten Dichtlippe abgewandten Seite derart geformt, dass eintretendes Medium zur Rezirkulation aus dem Gehäusespalt gezwungen wird. Hierzu kann die zweite Kammer auf einer der zweiten Dichtlippe abgewandten Seite gekrümmt ausgebildet sein. Vorteilhaft ist die zweite Kammer oberhalb der zweiten Dichtlippe in der Art angeordnet, dass ein Medium, welches in diese Kammer vordringt, durch die Schwerkraft ungehindert wieder nach unten abfließen kann.

Da das Dichtungssystem formschlüssig, und/oder stoffschlüssig mit dem ersten Gehäuseteil oder dem zweiten Gehäuseteil verbunden ist, wird auf einfache und kostengünstige Weise eine Verbindung zwischen dem Dichtungssystem und einem der Gehäuseteile oder beiden Gehäuseteilen geschaffen. Das Dichtungssystem kann mit dem ersten Gehäuseteil und/oder dem zweiten Gehäuseteil verpresst und/oder verklebt sein. Ferner kann das Dichtungssystem stoffschlüssig mit dem ersten Gehäuseteil und/oder dem zweiten Gehäuseteil verbunden sein. So können das Dichtungssystem und das erste Gehäuseteil und/oder das zweite Gehäuseteil im 2-Komponenten-Spritzgußverfahren hergestellt sein.

Der Auflageabschnitt ist stoffeinheitlich in das Dichtungssystem integrierbar und damit kostengünstig herstellbar.

In einer vorteilhaften Ausgestaltung weist die Lagereinrichtung wenigstens ein Gleitlager und/oder ein Wälzlager auf. Das Gleitlager kann einen Gleitkörper aus Metall aufweisen, der zwischen den beiden Gehäuseteilen angeordnet ist. Ferner kann das Gleitlager zwei Gleitkörper aufweisen, die zwischen den beiden Gehäuseteilen angeordnet sind. Beide Gleitkörper können aus Kunststoff sein. Ferner kann einer der Gleitkörper aus Kunststoff sein und der andere Gleitkörper kann aus Metall oder einem Hybridwerkstoff sein.

In einer vorteilhaften Ausgestaltung ist zwischen den beiden Gehäuseteilen eine Labyrinthdichtung ausgebildet. Dadurch wird die Dichtwirkung nochmalig verbessert und Fett, welches sich im Gleit-oder Wälzlager befindet, wird am Fließen in den Gehäusespalt gehindert. Bevorzugt ist die Labyrinthdichtung dem Dichtungssystem nachgeschaltet. Vorteilhaft ist die Labyrinthdichtung aus den beiden Gehäuseteilen gebildet. So kann eines der Gehäuseteile einen Vorsprung aufweisen, der in einen in dem anderen Gehäuseteil ausgebildeten Rücksprung eingreift.

In einer vorteilhaften Ausgestaltung sind die beiden Gehäuseteile aus einem Kunststoff, und das Dichtungssystem ist aus einem thermoplastischen Elastomer. Dadurch kann das Dichtungssystem stoffschlüssig mit dem ersten Gehäuseteil und/oder dem zweiten Gehäuseteil im 2-Komponenten-Spritzgussverfahren hergestellt werden. Wenn das Dichtungssystem einen Anlageabschnitt zur Anlage eines Federelementes aufweist, kann in das Dichtungssystem die elastomere Auflage des Federelementes stoffeinheitlich integriert sein. Vorteilhaft sind die beiden Gehäuseteile aus einem faserverstärkten Kunststoff, insbesondere aus Polyamid mit einem Glasfaseranteil von mehr als 30%. Die Gehäuseteile können ein Additiv aufweisen, das die Gleiteigenschaften verbessert. Darüber hinaus kann das Dichtungssystem aus einem vulkanisierten Elastomer sein.

Nachfolgend werden das Lager, das Dichtungssystem sowie weitere Merkmale und Vorteile anhand von Ausführungsbeispielen näher erläutert, die in den Figuren schematisch dargestellt sind. Hierbei zeigen:
- Figur 1: einen vergrößerten Ausschnitt eines Längsschnitts durch ein Lager gemäß einer ersten Ausführungsform und einem Dichtungssystem gemäß einer ersten Ausführungsform;
- Figur 2: einen vergrößerten Ausschnitt eines Längsschnitts durch ein Lager gemäß einer zweiten Ausführungsform und einem Dichtungssystem gemäß einer ersten Ausführungsform;
- Figur 3: einen vergrößerten Ausschnitt eines Längsschnitts durch ein Lager gemäß einer dritten Ausführungsform und einem Dichtungssystem gemäß einer zweiten Ausführungsform;
- Figur 4: einen vergrößerten Ausschnitt eines Längsschnitts durch ein Lager gemäß einer vierten Ausführungsform und einem Dichtungssystem gemäß einer dritten Ausführungsform; und
- Figur 5: einen vergrößerten Ausschnitt eines Längsschnitts durch ein Lager gemäß einer fünften Ausführungsform und einem Dichtungssystem gemäß einer dritten Ausführungsform.

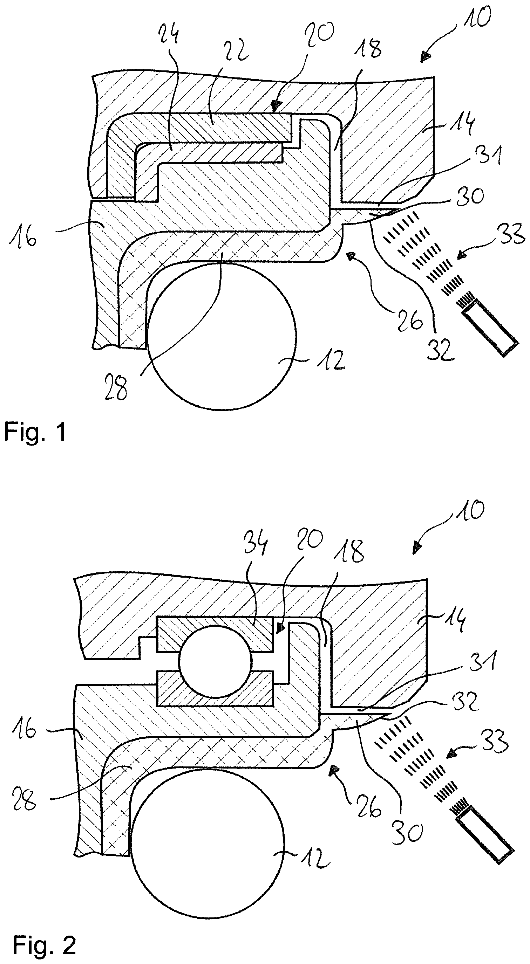

In Figur 1 ist ein vergrößerter Ausschnitt eines Lagers 10 für ein nicht dargestelltes Stützlager gezeigt, welches durch eine Feder 12 belastet ist, die Teil eines nicht dargestellten Federbeins, insbesondere eines McPherson-Federbeins sein kann, um eine Rotation zwischen einer nicht dargestellten Fahrzeugkarosserie und der Feder 12 zu ermöglichen.

Das Lager 10 weist ein erstes Gehäuseteil 14 und ein zweites Gehäuseteil 16 auf, zwischen denen ein Gehäusespalt 18 ausgebildet ist. Innerhalb des Gehäusespalts 18 ist eine Lagereinrichtung 20 angeordnet, über die die beiden Gehäuseteile 14, 16 relativ zueinander verdrehbar sind. Das erste Gehäuseteil 14 stützt sich an einer nicht dargestellten Fahrzeugkarosserie ab, wohingegen sich das zweite Gehäuseteil 16 auf der Feder 12 abstützt. Statt der Feder 12 kann sich das zweite Gehäuseteil 16 an eine nicht dargestellte Luftfeder anschließen. In dem Fall kann das zweite Gehäuseteil 16 beispielsweise Teil eines Abrollkolbens der Luftfeder sein. Die beiden Gehäuseteile 14, 16 sind aus einem Kunststoff, insbesondere einem faserverstärkten Kunststoff.

Die Lagereinrichtung 20 weist einen ersten Gleitkörper 22 und einen zweiten Gleitkörper 24 auf, die gleitend aneinander anliegen, so dass die beiden Gleitkörper 22, 24 gegeneinander gleiten, wenn die beiden Gehäuseteile 14, 16 gegeneinander verdreht werden. Die beiden Gleitkörper 22, 24 sind form-, kraft- und/oder stoffschlüssig mit dem jeweiligen Gehäuseteil 14, 16 verbunden. Einer der Gleitkörper 22, 24 kann aus Kunststoff und der andere Gleitkörper 22, 24 kann aus Metall oder einem Hybridwerkstoff sein. Ferner können beide Gleitkörper 22, 24 aus einem Kunststoff sein.

Zur Abdichtung des Gehäusespalts 18 vor einem Eintritt eines Mediums, wie beispielsweise eines in Fig. 1 dargestellten Wasserpartikelgemisches 33, ist ein Dichtungssystem 26 vorgesehen, das den Gehäusespalt 18 abdichtet. Das Dichtungssystem 28 ist aus einem thermoplastischen Elastomer oder einem vulkanisierten Elastomer und kann formschlüssig, kraftschlüssig und/oder stoffschlüssig mit dem zweiten Gehäuseteil 16 verbunden sein. Bevorzugt sind das zweite Gehäuseteil 16 und das Dichtungssystem 26 stoffeinheitlich miteinander im 2-Komponenten-Spritzgussverfahren hergestellt.

Das Dichtungssystem 26 weist einen Auflageabschnitt 28 zur Auflage der Feder 12 und eine erste Dichtlippe 30 auf, die verschwenkbar ausgebildet ist. Die erste Dichtlippe 30 ist im nicht-dichtenden Zustand von dem ersten Gehäuseteil 14 beabstandet, wobei die erste Dichtlippe 30 im nicht-dichtenden Zustand näherungsweise horizontal von dem zweiten Gehäuseteil 16 abragt. Die erste Dichtlippe 30 weist auf einer dem ersten Gehäuseteil 14 abgewandten Seite 32 eine konturierte Fläche, insbesondere eine abgeschrägte Fläche auf.

Im nicht-dichten Zustand ist zwischen der ersten Dichtlippe 30 und dem ersten Gehäuseteil 14 ein horizontal verlaufender erster Spalt 31 ausgebildet. Die Länge des ersten Spaltes 31 beträgt mindestens 5 mm, wobei die Länge der Entfernung von einem freien Ende der ersten Dichtlippe 30 bis zu dem Beginn des Gehäusespaltes 18 entspricht.

Beim Auftreffen eines Mediums, wie das in Fig. 1 dargestellte Wasserpartikelgemisch 33, auf die erste Dichtlippe 30, verschwenkt die erste Dichtlippe 30 und überbrückt den ersten Spalt 31, bis die erste Dichtlippe 30 an dem ersten Gehäuseteil 14 anliegt und den Gehäusespalt 18 verschließt. Somit wird der Gehäusespalt 18 effektiv abgedichtet und ein Eintritt des Wasserpartikelgemisches 33 wird verhindert.

Sofern das Wasserpartikelgemisch 33 in den Gehäusespalt 18 eintritt, kann dieses wieder aus dem Gehäusespalt 18 herausfließen, sobald die erste Dichtlippe 30 wieder in den unverformten Zustand zurückgekehrt, insbesondere zurückschwenkt. Dies ist dann der Fall, wenn kein Wasserpartikelgemisch 33 mehr auf die erste Dichtlippe 30 auftrifft.

Da die erste Dichtlippe 30 im nicht-dichtenden Zustand von dem ersten Gehäuseteil 14 beabstandet ist, weist das Dichtungssystem 26 im Betriebszustand eine berührungslose Funktion auf, so dass für eine Relativverdrehung der beiden Gehäuseteile 14, 16 ein geringeres Losbrechmoment erforderlich ist. Gleichzeitig weist das Dichtungssystem 26 eine gute Dichtungswirkung auf.

Im Folgenden werden weitere Ausführungsformen für das Lager und das Dichtungssystem beschrieben, wobei für gleiche und funktionsgleiche Teile dieselben Bezugszeichen verwendet werden.

In Figur 2 ist eine zweite Ausführungsform des Lagers 10 gezeigt, die sich von der ersten Ausführungsform dadurch unterscheidet, dass die Lagereinrichtung 20 anstelle zweier Gleitkörper 22,24 ein Kugellager 34 aufweist. Das Kugellager 34 kann form-, kraft- und/oder stoffschlüssig mit den beiden Gehäuseteilen 14, 16 verbunden sein.

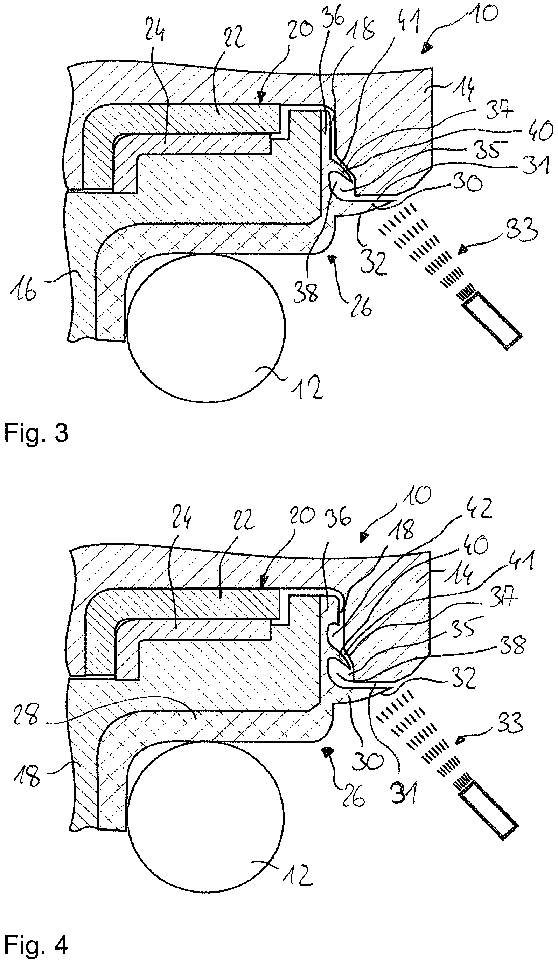

In Figur 3 ist eine dritte Ausführungsform des Lagers 10 und eine zweite Ausführungsform des Dichtungssystems 26 gezeigt, die sich von den anderen Ausführungsformen in der Ausgestaltung des ersten Gehäuseteiles 14 und dem Dichtungssystem 26 unterscheiden. Das erste Gehäuseteil 14 weist eine Aussparung 35 auf, die dem Dichtungssystem 26 zugewandt ist. Die Aussparung 35 ist mit einer konischen Anlagefläche 37 versehen.

Das in Fig. 3 dargestellte Dichtungssystem 26 weist einen Anlageabschnitt 36 auf, der an dem zweiten Gehäuseteil 16 anliegt. An die erste Dichtlippe 30 schließt sich im Bereich der Aussparung 35 eine erste Kammer 38 an, die in das Dichtungssystem 26 eingebracht und zwischen dem Anlageabschnitt 26 und dem ersten Gehäuseteil 14 gebildet ist. Die erste Kammer 38 bewirkt eine Querschnittsaufweitung und sorgt so für einen Druckabbau, wenn Medium über die erste Dichtlippe 20 in den Gehäusespalt 18 eindringt. Wie in Figur 3 ersichtlich ist, ist die erste Kammer 38 derart ausgebildet, dass eine Rezirkulation in ihrem Inneren auftritt und so für einen weiteren Druckabbau sorgt.

Wie zudem in Figur 3 ersichtlich ist, weist das Dichtungssystem 26 eine zweite Dichtlippe 40 auf, die innerhalb der Aussparung 35 angeordnet ist. Die zweite Dichtlippe 40 begrenzt die erste Kammer 38 und ist in Reihe zu der ersten Dichtlippe 30 angeordnet. Die zweite Dichtlippe 40 ist verschwenkbar ausgebildet und ist in Richtung der ersten Dichtlippe 30 gewölbt. Im nicht-dichtenden Zustand ist die zweite Dichtlippe 40 von der konischen Anlagefläche 37 beabstandet, wobei zwischen der zweiten Dichtlippe 40 und dem ersten Gehäuseteil 14 ein zweiter Spalt 41 ausgebildet ist. Die zweite Dichtlippe 40 ist somit ebenfalls berührungslos und kann als Backup für die erste Dichtlippe 30 dienen, wenn diese beschädigt sein sollte.

Wenn der Druck in der ersten Kammer 28 ansteigt, verschwenkt die zweite Dichtlippe 40 und überbrückt den zweiten Spalt 41, bis die zweite Dichtlippe 40 an der konischen Anlagefläche 37 anliegt und den Gehäusespalt 18 verschließt. Da die zweite Dichtlippe 14 im nicht-dichtenden Zustand von der konischen Anlagefläche 37 beabstandet und in Richtung der ersten Dichtlippe 30 gewölbt ist, kann Medium, welches über die zweite Dichtlippe 40 in den zweiten Spalt 41 oder den Gehäusespalt 18 eingetreten ist, aufgrund der Schwerkraft wieder abfließen.

In Figur 4 ist eine vierte Ausführungsform des Lagers 10 und eine dritte Ausführungsform des Dichtungssystems 26 gezeigt, die sich von der dritten Ausführungsform des Lagers 10 und der zweiten Ausführungsform des Dichtungssystems 26 in der Ausgestaltung des Gehäusespaltes 18 und dem Dichtungssystem 26 unterscheiden.

Der zwischen den beiden Gehäuseteilen 14, 16 ausgebildete Gehäusespalt 18 ist im Vergleich zu den anderen Ausführungsformen breiter, um Bauraum für eine unmittelbar an die zweite Dichtlippe 40 anschließende zweite Kammer 42 zu schaffen. Die zweite Kammer 42 ist in das Dichtungssystem 26, insbesondere den Anlageabschnitt 36 eingebracht. Die zweite Kammer 42 sorgt aufgrund ihrer Querschnittsaufweitung für einen erneuten Druckabbau, wenn Medium über die zweite Dichtlippe 40 weiter in den Gehäusespalt 18 eintritt. Wie zudem in Figur 4 ersichtlich ist, ist die zweite Kammer 42 auf einer der zweiten Dichtlippe 40 abgewandten Seite derart geformt, dass eintretendes Medium zur Rezirkulation in Richtung der zweiten Dichtlippe 40 gezwungen wird, so dass das Medium wieder aus dem Gehäusespalt 18 abfließen kann.

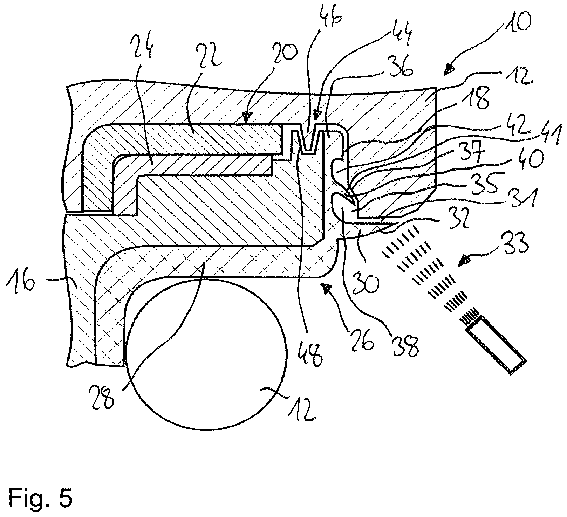

In Figur 5 ist eine fünfte Ausführungsform des Lagers 10 gezeigt, die sich von der vierten Ausführungsform dadurch unterscheidet, dass eine Labyrinthdichtung 44 vorgesehen ist, die sich an das Dichtungssystem 26 anschließt. Die Labyrinthdichtung 44 ist aus den beiden Gehäuseteilen 14, 16 gebildet, wobei das erste Gehäuseteil 14 eine Vorsprung 46 aufweist, der in einem am zweiten Gehäuseteil 16 ausgebildeten Rücksprung 48 eingreift.

### Bezugszeichenliste

- 10: Lager
- 12: Feder
- 14: erstes Gehäuseteil
- 16: zweites Gehäuseteil
- 18: Gehäusespalt
- 20: Lagereinrichtung
- 22: erster Gleitkörper
- 24: zweiter Gleitkörper
- 26: Dichtungssystem
- 28: Auflageabschnitt
- 30: erste Dichtlippe
- 31: erster Spalt
- 32: abgewandte Seite
- 33: Wasserpartikelgemisch
- 34: Kugellager
- 35: Aussparung
- 36: Anlageabschnitt
- 37: konische Anlagefläche
- 38: erste Kammer
- 40: zweite Dichtlippe
- 41: zweiter Spalt
- 42: zweite Kammer
- 44: Labyrinthdichtung
- 46: Vorsprung
- 48: Rücksprung

## Patentansprüche

1. Lager (10) für ein Stützlager, aufweisend ein erstes Gehäuseteil (14) und ein zweites Gehäuseteil (16), zwischen denen ein Gehäusespalt (18) ausgebildet ist, wobei in dem Gehäusespalt (18) eine Lagereinrichtung (20) angeordnet ist, wobei ein Dichtungssystem (26) vorgesehen ist, das den Gehäusespalt (18) abdichtet, wobei das Dichtungssystem (26) wenigstens eine erste Dichtlippe (30) aufweist, die verschwenkbar ausgebildet ist, wobei die erste Dichtlippe (30) im nicht-dichtenden Zustand von dem ersten Gehäuseteil (14) und/oder dem zweiten Gehäuseteil (16) beabstandet ist und zum Abdichten des Gehäusespaltes (18) verschwenkt und an dem ersten Gehäuseteil (14) und/oder dem zweiten Gehäuseteil (16) anliegt, wobei das Dichtungssystem (26) einen Auflageabschnitt (28) zur Auflage eines Federelementes aufweist, **dadurch gekennzeichnet, dass** der Auflageabschnitt stoffeinheitlich in das Dichtungssystem integriert ist, wobei das Dichtungssystem (26) formschlüssig und/oder stoffschlüssig mit dem ersten Gehäuseteil (14) und/oder dem zweiten Gehäuseteil (16) verbunden ist, und wobei das Dichtungssystem (26) und das erste Gehäuseteil (14) und/oder das zweite Gehäuseteil (16) im 2-Komponenten-Spritzgußverfahren hergestellt sind.

2. Lager (10) nach Anspruch 1, **dadurch gekennzeichnet, dass** zwischen der wenigstens ersten Dichtlippe (30) und dem ersten Gehäuseteil (14) und/oder dem zweiten Gehäuseteil (16) ein näherungsweise horizontal verlaufender erster Spalt (31) ausgebildet ist.

3. Lager (10) nach Anspruch 1 oder 2, **dadurch gekennzeichnet, dass** die erste Dichtlippe (30) im nicht-dichtenden Zustand näherungsweise horizontal von dem ersten Gehäuseteil (14) und/oder dem zweiten Gehäuseteil (16) abragt.

4. Lager (10) nach einem der vorhergehenden Ansprüche, **dadurch gekennzeichnet, dass** sich an die erste Dichtlippe (30) eine erste Kammer (38) anschließt.

5. Lager (10) nach einem der vorhergehenden Ansprüchen, **dadurch gekennzeichnet, dass** das Dichtungssystem (26) eine zweite Dichtlippe (40) aufweist.

6. Lager (10) nach Anspruch 5, **dadurch gekennzeichnet, dass** die beiden Dichtlippen (30, 40) in Reihe angeordnet sind.

7. Lager (10) nach Anspruch 5 oder 6, **dadurch gekennzeichnet, dass** die zweite Dichtlippe (40) innerhalb des Gehäusespaltes (18) angeordnet ist, wobei zwischen der zweiten Dichtlippe (40) und dem ersten Gehäuseteil (14) und/oder dem zweiten Gehäuseteil (16) ein zweiter Spalt (41) ausgebildet ist.

8. Lager (10) nach einem der Ansprüche 5 bis 7, **dadurch gekennzeichnet, dass** die zweite Dichtlippe (40) die erste Kammer (38) begrenzt.

9. Lager (10) nach einem der Ansprüche 5 bis 8, **dadurch gekennzeichnet, dass** die zweite Dichtlippe (40) gewölbt ist.

10. Lager (10) nach einem der Ansprüche 5 bis 9, **dadurch gekennzeichnet, dass** sich an die zweite Dichtlippe (40) eine zweite Kammer (42) anschließt.

11. Lager (10) nach einem der vorhergehenden Ansprüche, **dadurch gekennzeichnet, dass** die Lagereinrichtung (20) wenigstens ein Gleitlager und/oder ein Wälzlager aufweist.

12. Lager (10) nach einem der vorhergehenden Ansprüche, **dadurch gekennzeichnet, dass** zwischen den beiden Gehäuseteilen (14, 16) eine Labyrinthdichtung (44) ausgebildet ist.

13. Lager (10) nach einem der vorhergehenden Ansprüche, **dadurch gekennzeichnet, dass** die beiden Gehäuseteile (14, 16) aus einem Kunststoff sind, und dass das Dichtungssystem (26) aus einem thermoplastischen Elastomer ist.

## Claims

1. Bearing (10) for a support bearing, having a first housing part (14) and a second housing part (16), between which a housing gap (18) is formed, wherein a bearing apparatus (20) is arranged in the housing gap (18), wherein a sealing system (26) is provided, which seals the housing gap (18), wherein the sealing system (26) has at least one first sealing lip (30), which is formed such that it can pivot, wherein the first sealing lip (30) is at a distance from the first housing part (14) and/or the second housing part (16) in the non-sealing state, and for sealing the housing gap (18), same is pivoted and brought into contact with the first housing part (14) and/or the second housing part (16), wherein the sealing system (26) has a support section (28) for supporting a spring element, **characterised in that** the support section is materially uniformly integrated into the sealing system, wherein the sealing system (26) is positively and/or firmly connected to the first housing part (14) and/or the second housing part (16), and wherein the sealing system (26) and the first housing part (14) and/or the second housing part (16) are produced using a 2-component injection moulding method.

2. Bearing (10) according to claim 1, **characterised in that** an approximately horizontal first gap (31) is formed between the at least one first sealing lip (30) and the first housing part (14) and/or the second housing part (16).

3. Bearing (10) according to claim 1 or 2, **characterised in that** the first sealing lip (30) protrudes approximately horizontally from the first housing part (14) and/or the second housing part (16) in the non-sealing state.

4. Bearing (10) according to any of the preceding claims, **characterised in that** a first chamber (38) adjoins the first sealing lip (30).

5. Bearing (10) according to any of the preceding claims, **characterised in that** the sealing system (26) has a second sealing lip (40).

6. Bearing (10) according to claim 5, **characterised in that** the two sealing lips (30, 40) are arranged in a row.

7. Bearing (10) according to claim 5 or 6, **characterised in that** the second sealing lip (40) is arranged inside the housing gap (18), wherein a second gap (41) is formed between the second sealing lip (40) and the first housing part (14) and/or the second housing part (16).

8. Bearing (10) according to any of claims 5 to 7, **characterised in that** the second sealing lip (40) borders the first chamber (38).

9. Bearing (10) according to any of claims 5 to 8, **characterised in that** the second sealing lip (40) is curved.

10. Bearing (10) according to any of claims 5 to 9, **characterised in that** a second chamber (42) adjoins the second sealing lip (40).

11. Bearing (10) according to any of the preceding claims, **characterised in that** the bearing apparatus (20) has at least one slide bearing and/or one roller bearing.

12. Bearing (10) according to any of the preceding claims, **characterised in that** a labyrinth seal (44) is formed between the two housing parts (14, 16).

13. Bearing (10) according to any of the preceding claims, **characterised in that** the two housing parts (14, 16) are made from plastic and the sealing system (26) is made from a thermoplastic elastomer.

## Revendications

1. Palier (10) pour un palier de support, présentant un premier élément de boîtier (14) et un second élément de boîtier (16), entre lesquels une fente de boîtier (18) est réalisée, dans lequel un dispositif de palier (20) est agencé dans la fente de boîtier (18), dans lequel un système d'étanchéification (26) est prévu, qui étanchéifie la fente de boîtier (18), dans lequel le système d'étanchéification (26) présente au moins une première lèvre d'étanchéité (30), qui est réalisée de manière pivotante, dans lequel la première lèvre d'étanchéité (30) à l'état non étanche est espacée du premier élément de boîtier (14) et/ou du second élément de boîtier (16) et pivote pour l'étanchéification de la fente de boîtier (18) et s'applique contre le premier élément de boîtier (14) et/ou le second élément de boîtier (16), dans lequel le système d'étanchéification (26) présente une section d'appui (28) pour l'appui d'un élément ressort, **caractérisé en ce que** la section d'appui est intégrée dans la même matière dans le système d'étanchéification, dans lequel le système d'étanchéification (26) est relié par complémentarité de forme et/ou de matière au premier élément de boîtier (14) et/ou au second élément de boîtier (16), et dans lequel le système d'étanchéification (26) et le premier élément de boîtier (14) et/ou le second élément de boîtier (16) sont fabriqués selon le procédé de moulage par injection à deux composants.

2. Palier (10) selon la revendication 1, **caractérisé en ce qu'**une première fente (31) s'étendant approximativement à l'horizontale est réalisée entre l'au moins une première lèvre d'étanchéité (30) et le premier élément de boîtier (14) et/ou le second élément de boîtier (16).

3. Palier (10) selon la revendication 1 ou 2, **caractérisé en ce que** la première lèvre d'étanchéité (30) fait saillie à l'état non étanche approximativement à l'horizontale du premier élément de boîtier (14) et/ou du second élément de boîtier (16).

4. Palier (10) selon l'une quelconque des revendications précédentes, **caractérisé en ce qu'**une première chambre (38) se raccorde à la première lèvre d'étanchéité (30).

5. Palier (10) selon l'une quelconque des revendications précédentes, **caractérisé en ce que** le système d'étanchéité (26) présente une seconde lèvre d'étanchéité (40).

6. Palier (10) selon la revendication 5, **caractérisé en ce que** les deux lèvres d'étanchéité (30, 40) sont agencées en série.

7. Palier (10) selon la revendication 5 ou 6, **caractérisé en ce que** la seconde lèvre d'étanchéité (40) est agencée à l'intérieur de la fente de boîtier (18), dans lequel une seconde fente (41) est réalisée entre la seconde lèvre d'étanchéité (40) et le premier élément de boîtier (14) et/ou le second élément de boîtier (16).

8. Palier (10) selon l'une quelconque des revendications 5 à 7, **caractérisé en ce que** la seconde lèvre d'étanchéité (40) délimite la première chambre (38).

9. Palier (10) selon l'une quelconque des revendications 5 à 8, **caractérisé en ce que** la seconde lèvre d'étanchéité (40) est voûtée.

10. Palier (10) selon l'une quelconque des revendications 5 à 9, **caractérisé en ce qu'**une seconde chambre (42) se raccorde à la seconde lèvre d'étanchéité (40).

11. Palier (10) selon l'une quelconque des revendications précédentes, **caractérisé en ce que** le dispositif de palier (20) présente au moins un palier lisse et/ou un palier de roulement.

12. Palier (10) selon l'une quelconque des revendications précédentes, **caractérisé en ce qu'**un joint labyrinthe (44) est réalisé entre les deux éléments de boîtier (14, 16).

13. Palier (10) selon l'une quelconque des revendications précédentes, **caractérisé en ce que** les deux éléments de boîtier (14, 16) sont en un plastique, et que le système d'étanchéification (26) est en un élastomère thermoplastique.
